(19) Europäisches Patentamt

European Patent Office

Office européen des brevets

(11) **EP 1 420 393 B1**

(12) **EUROPEAN PATENT SPECIFICATION**

(45) Date of publication and mention
of the grant of the patent:
**22.03.2006 Bulletin 2006/12**

(21) Application number: **03025423.9**

(22) Date of filing: **05.11.2003**

(51) Int Cl.:
***G11B 5/64*** *(2006.01)*      ***G11B 5/82*** *(2006.01)*

(54) **Compact removable magnetic recording medium**

Kompaktes abnehmbares magnetisches Aufzeichnungsmittel

Moyen d' enregistrement magnétique compact amovible

(84) Designated Contracting States:
**DE FR GB**

(30) Priority: **15.11.2002 JP 2002332619**

(43) Date of publication of application:
**19.05.2004 Bulletin 2004/21**

(73) Proprietor: **FUJI PHOTO FILM CO., LTD.**
**Minami-Ashigara-shi, Kanagawa 250-0123 (JP)**

(72) Inventors:
• **Usuki, Kazuyuki**
  **Odawara-shi**
  **Kanagawa (JP)**

• **Moriwaki, Kenichi**
  **Odawara-shi**
  **Kanagawa (JP)**

(74) Representative: **HOFFMANN EITLE**
**Patent- und Rechtsanwälte**
**Arabellastrasse 4**
**81925 München (DE)**

(56) References cited:
**JP-A- 2001 126 246      US-A- 4 619 856**
**US-A- 4 828 903          US-B1- 6 277 484**

**Description**

**FIELD OF THE INVENTION**

The present invention relates to a compact removable (commutable) magnetic recording medium for recording digital data.

**BACKGROUND OF THE INVENTION**

With the spread of the Internet in recent years, the use form of the computer has been changed, e.g., to the form of processing a great volume of moving picture data and sound data with a personal computer. Along with this trend, storage capacity required of magnetic recording media, such as hard discs, has increased.

In a hard disc apparatus, a magnetic head slightly floats from the surface of a magnetic disc with the rotation of the magnetic disc and magnetic recording is performed by non-contact recording. This mechanism prevents the magnetic disc from breaking by the contact of the magnetic head and the magnetic disc. With the increase of density of magnetic recording, the floating height of a magnetic head is gradually decreased, and now the floating height of from 10 to 20 nm has been realized by the use a magnetic disc comprising a specularly polished super-smooth glass substrate having provided thereon a magnetic recording layer. Areal recording density and recording capacity of hard disc drive have markedly increased during the past few years by technological innovation, e.g., the floating height reduction of head, the improvement of the structure of head, and the improvement of the recording film of disc.

With the increase of throughput of digital data, there arises a need of moving a high capacity data, such as moving picture data, by recording on a removable medium. However, since the substrate of a hard disc is made of a hard material and the distance between head and disc is extremely narrow as described above, there is the fear of happening of trouble by the collision of head and disc, and entraining of dusts during operation when a hard disc is used as a removable medium such as a floppy disc and a rewritable optical disc, and so a hard disc cannot be used.

Since commercially available flexible magnetic discs at present have such a structure that the recording film is formed by coating a magnetic substance on a polymer film together with a polymer binder, the high density recording characteristics of the magnetic layer of flexible magnetic discs are inferior to those of hard discs having a magnetic film formed by sputtering, and the achieved recording density of flexible magnetic discs is only 1/10 or less of that of hard discs.

In direct-read after-write and rewritable optical discs represented by DVD-R/RW, the head and the disc are not close to each other as in magnetic discs, therefore they are excellent in removability (commutability) and widespread. However, from the thickness of light pickup and economical viewpoint, it is difficult for optical discs to take a disc structure of using both surfaces as recording surfaces as in magnetic discs, which is advantageous for increasing capacity. Further, optical discs are low in areal recording density and also in data transfer speed as compared with magnetic discs, and so their performance is not sufficient yet to be used as rewritable type high capacity recording media. Further, since optical disc drives are complicated in structure, it is difficult to make the drive compact.

As recording media for, e.g., digital cameras and digital video recorders, smart media and the like having semiconductor memories built in are now the main stream of such recording media, however, recording media employing semiconductor memory are very high in costs with respect to storage capacity as compared with other magnetic and optical discs. Therefore, it is difficult to satisfy the increase in capacity and the reduction of costs at the same time.

**SUMMARY OF THE INVENTION**

As described above, although there are great demands for rewritable compact removable magnetic recording media of high capacity, those which satisfy the points of performance, reliability and cost have not been developed yet. Therefore, the present invention has been done in view of the problems of the above-described prior arts, and an object of the present invention is to provide a compact removable magnetic recording medium which shows high performance and high reliability and is inexpensive by using a ferromagnetic metal thin film containing cobalt as a recording layer.

The present invention has been achieved by a compact removable magnetic recording medium which is a disc medium for use in a magnetic recording system utilizing an MR head, wherein the removable disc medium is encased in a cartridge, the diameter of the disc is from 20 mm to 50 mm, and the disc has at least on one side of a flexible polymer support a recording layer (also referred to as a magnetic layer or a magnetic recording layer) comprising a ferromagnetic metal alloy containing cobalt. The magnetic recording layer further comprises a mixture of a ferromagnetic metal alloy containing cobalt and a nonmagnetic oxide. The disc medium comprises a flexible polymer support, an undercoat layer, a recording layer, a protective layer and a lubricating layer in this order. The support of the disc medium contains polyethylene terephthalate or polyethylene naphthalate and has a thickness of 30 $\mu$m to 70 $\mu$m. The surface of the undercoat layer has 0.1 to 100/$\mu$m$^2$ of projections having a height of from 5 nm to 60 nm. The recording layer comprises a nonmagnetic oxide and a ferromagnetic metal alloy containing cobalt. The lubricating layer contains a lubricant.

That is, since the compact removable magnetic recording medium in the present invention uses a flexible polymer support as the support, the impact at the time of contact of a magnetic head with a magnetic disc is reduced, the magnetic head and the magnetic disc slide with keeping in contact with each other stably, and stable head running becomes possible. Therefore, happening of troubles due to the collision of head and disc and entraining of dusts during operation can be prevented. Further, an inexpensive flexible polymer support can be used as the substrate, and so the compact removable magnetic recording medium of the present invention can be manufactured inexpensively.

In addition, since the compact removable magnetic recording medium of the present invention has a magnetic layer comprising a ferromagnetic metal thin film containing cobalt, preferably a ferromagnetic metal thin film comprising a mixture of a ferromagnetic metal alloy containing cobalt and a nonmagnetic oxide, high density recording such as hard discs becomes possible and capacity can be increased. The ferromagnetic metal thin film comprising the mixture of a ferromagnetic metal alloy containing cobalt and a nonmagnetic oxide has a so-called granular structure which is proposed in hard discs, and the ferromagnetic metal thin films disclosed in JP-A-5-73880 (the term "JP-A" as used herein means an "unexamined published Japanese patent application") and JP-A-7-311929 can be used.

By using such a granular structural ferromagnetic metal thin film, in particular, heating of a substrate as in conventional hard discs becomes unnecessary, and good magnetic characteristics can be obtained even when the temperature of a substrate is room temperature. Accordingly; the substrate is not damaged by heat even when a polymer film is used as the substrate, and the invention can provide a compact removable magnetic recording medium which is free of deformation and is flat.

## BRIEF DESCRIPTION OF THE DRAWINGS

Fig. 1 (Figs. 1-A and 1-B) is a conceptual drawing showing an example of the compact removable magnetic recording medium according to the present invention.
Fig. 2 is a cross-sectional conceptual drawing showing an example of the compact removable magnetic recording medium according to the present invention.
Fig. 3 is a cross-sectional conceptual drawing showing the layer structure of a discmedium which is the compact removable magnetic recording medium according to the present invention.
Fig. 4 is a conceptual drawing of a web sputtering apparatus used in the examples of the present invention.

[Description of Reference Numerals and Signs]

| | |
|---|---|
| 1: | Disc medium |
| 2: | Center core |
| 3: | Cartridge |
| 4: | Shutter |
| 11: | Support |
| 12: | Magnetic layer |
| 13: | Undercoat layer |
| 14: | Under layer |
| 15: | Protective layer |
| 16: | Lubricating layer |
| 21: | Web sputtering apparatus |
| 22: | Vacuum chamber |
| 23: | Unwinding roll |
| 24: | Raw web |
| 25A, 25B: | Tensile force controlling rolls |
| 26: | Film-forming chamber |
| 27A, 27B, 27C, 27D: | Sputtering gas feed pipe |
| 28A, 28B: | Film-forming roll |
| 29A, 29B, 29C, 29D: | Sputtering cathodes |

## DETAILED DESCRIPTION OF THE INVENTION

The mode for carrying out the invention is described in greater detail with reference to the accompanying drawings.

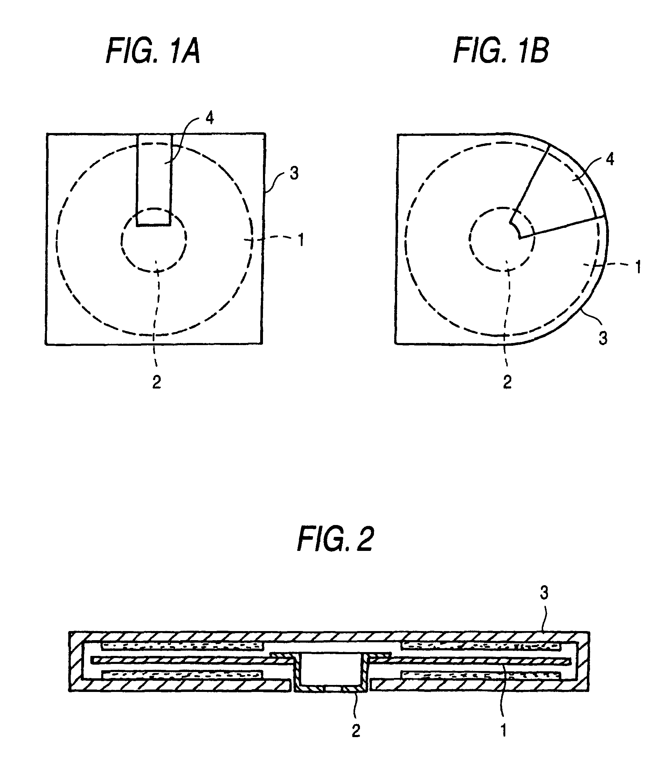

As shown in Figs. 1-A and 1-B and Fig. 2, the compact removable magnetic recording medium according to the present invention is a structure comprising disc medium 1 having center core 2 formed at the central part, which is encased in cartridge 3 formed of metal or plastic. Cartridge 3 is generally provided with an access window covered with metal shutter 4. Recording of signals on disc medium 1 and reproduction are carried out by the introduction of a magnetic head through the access window.

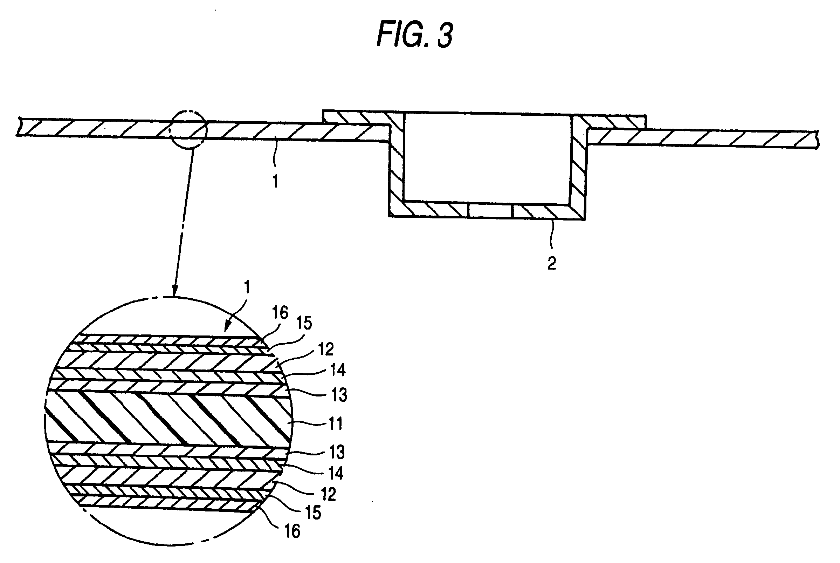

Disc medium 1 is described in detail with reference to Fig. 3. Disc medium 1 of the magnetic recording medium of the present invention has at least on one side of flexible polymer support 11 a recording layer 12. An example of a disc medium having recording layers 12 on both sides of support 11 is shown in Fig. 3.

Disc medium 1 shown in Fig. 3 comprises disc-like support 11 comprising a flexible polymer film having on both sides thereof recording layer 12 comprising at least a ferromagnetic metal thin film containing cobalt. It is preferred that disc medium 1 comprise undercoat layer 13 for improving surface property and gas barrier property, under layer 14 for improving the magnetic characteristics of magnetic layer 12, magnetic layer 12, protective layer 15 for protecting the magnetic layer from corrosion and abrasion, and lubricating layer 16 for supplying a lubricant to improve running durability and corrosion resistance laminated in this order.

Magnetic layer 12 may be a so-called perpendicular magnetic recording film having an axis of easy magnetization in the perpendicular direction to the disc plane, or may be an in-plane magnetic recording film which is the main stream of the present hard discs. The direction of the axis of easy magnetization can be controlled by the materials and crystal structures of under layer 14 and the compositions and film-forming conditions of magnetic layer 12.

A ferromagnetic metal thin film containing cobalt can be used as magnetic layer 12 as described above, but magnetic layer 12 preferably comprises a mixture of a ferromagnetic metal alloy containing cobalt and a nonmagnetic oxide. The ferromagnetic metal alloy and nonmagnetic oxide are mixed in a macroscopic meaning, but in a microscopic meaning they form such a structure that the ferromagnetic metal alloy particles are covered with the nonmagnetic oxide. The ferromagnetic metal alloy particles have a particle size of from 1 to 100 nm or so, and preferably from 5 to 20 nm. A high coercive force and uniform magnetic particle size dispersibility can be achieved due to such a structure, as a result a low noise disc can be obtained.

In the compact removable magnetic recording medium according to the present invention, the magnetic layer preferably comprises a mixture of a ferromagnetic metal alloy containing cobalt and a nonmagnetic oxide, but the magnetic layer of course may not contain a nonmagnetic oxide.

As ferromagnetic metal alloys containing cobalt, alloys of Co with elements, e.g., Cr, Ni, Fe, Pt, B, Si and Ta can be used. Taking recording characteristics into consideration, Co-Pt, Co-Cr, Co-Pt-Cr, Co-Pt-Cr-Ta and Co-Pt-Cr-B are particularly preferred.

As nonmagnetic oxides, oxides of Si, Zr, Ta, B, Ti and Al can be used but $SiO_x$ (x represents from 1.5 to 2.2, and typically represents 2) is most preferably used, taking recording characteristics into consideration.

The proportion of a ferromagnetic metal alloy containing Co to a nonmagnetic oxide, i.e., ferromagnetic metal alloy/nonmagnetic oxide, is preferably from 95/5 to 80/20, and particularly preferably from 90/10 to 85/15. When the ratio of a ferromagnetic metal alloy is greater than this range, separation among magnetic particles is insufficient and coercive force decreases. Contrary to this, when the proportion of a ferromagnetic metal alloy is smaller than this range, signal output conspicuously decreases due to the reduction of the amount of magnetization.

The thickness of magnetic layer 12 comprising a cobalt-containing ferromagnetic metal alloy and a nonmagnetic oxide is preferably from 10 to 60 nm, and more preferably from 15 to 30 nm. When the thickness is higher than this range, noise increases markedly, while when the thickness is lower than this range, output conspicuously decreases.

The methods which can be used for forming magnetic layer 12 comprising a mixture of a cobalt-containing ferromagnetic metal alloy and a nonmagnetic oxide include vacuum film-forming methods, e.g., a vacuum deposition method and a sputtering method. Above all, a sputtering method is particularly preferably used in the present invention, since a super-thin film having a good quality can be easily formed. As the sputtering methods, any of well-known DC sputtering method and RF sputtering method can be used. In sputtering methods, a web sputtering system of continuously forming a layer on a continuous film is preferably used, further, a batch sputtering system and an in-line sputtering system as used in the manufacture of a hard disc can also be used.

As sputtering gases in sputtering, ordinarily used argon gas can be used, but other rare gases may also be used. A trace amount of oxygen gas may be introduced for the purpose of adjusting the oxygen content in a nonmagnetic oxide.

For forming a magnetic layer comprising a mixture of a cobalt-containing ferromagnetic metal alloy and a nonmagnetic oxide by sputtering methods, it is also possible to use two kinds of a ferromagnetic metal alloy target and a nonmagnetic oxide target by a co-sputtering method of them. However, for the purpose of improving the dispersibility of magnetic particle sizes to thereby form a homogeneous film, it is preferred to use the alloy target of a cobalt-containing ferromagnetic metal alloy and a nonmagnetic oxide. The alloy target can be formed by a hot press method.

For avoiding the impact at the time when a magnetic head and a magnetic disc are brought into contact, support 11 comprises a resin film having flexibility (a flexible polymer support) . As such resin films, resin films comprising polyethylene naphthalate or polyethylene terephthalate are exemplified. Since good recording characteristics can be obtained in the present invention without heating a substrate, polyethylene terephthalate and polyethylene naphthalate are used also from the viewpoint of the cost and the surface roughness.

Further, support 11 may comprise lamination of a plurality of resin films. The warpage and undulation attributable to a support itself can be reduced by using a laminated film, so that disc durability can be markedly improved.

As methods of lamination, rolllaminationbyheatrollers, lamination by flat sheet heat press, dry lamination by coating an adhesive on the surface to be adhered, and lamination using an adhesive sheet previously formed in the form of sheet are exemplified. The kind of adhesive is not particularly restricted, and generally used adhesives, e.g., a hot melt adhesive, a thermosetting adhesive, an UV-curable adhesive, an EB-curable adhesive, an adhesive sheet, and an anaerobic adhesive can be used.

Support 11 has a diameter of from 20 to 50 mm and a thickness of from 30 to 70 $\mu$m. When the thickness of support 11 is low, the stability at high speed rotation lowers and run out increases. On the other hand, when the thickness of support 11 is high, the stiffness at rotation increases and it becomes difficult to avoid the impact at the time when a magnetic head and a magnetic disc are brought into contact, which causes jumping of a magnetic head.

The nerve of a support represented by the following equation is preferably from 0.5 to 2.0 kgf/mm$^2$, and more preferably from 0.7 to 1.5 kgf/mm$^2$ when b is 10 mm.

$$\texttt{Nerve of a support} = \texttt{Ebd}^3/12$$

In the above equation, E represents Young's modulus, b represents a film width, and d represents a film thickness.

The surface of support 11 is preferably as smooth as possible for performing recording by means of magnetic heads. The unevenness of the surface of a support conspicuously degrades the recording and reproducing characteristics of signals. Specifically, when undercoat layer 13 described later is used, the central line average surface roughness Ra measured by an optical surface roughness meter is 5 nm or less, and preferably 2 nm or less, and the peak height measured by a feeler type surface roughness meter is 1 $\mu$m or less, and preferably 0.1 $\mu$m or less. When undercoat layer 13 is not used, the central line average surface roughness Ra measured by an optical surface roughness meter is 3 nm or less, and preferably 1 nm or less, and the peak height measured by a feeler type surface roughness meter is 0.1 $\mu$m or less, and preferably 0.06 $\mu$m or less.

It is preferred to provide undercoat layer 13 on the surface of a support for the purpose of improving a surface roughness and a gas barrier property. For forming magnetic layer 12 by sputtering, it is preferred that undercoat layer 13 is excellent in heat resistance, and as the materials of undercoat layer 13, e.g., polyimide resins, polyamideimide resins, silicone resins and fluorine resins can be used. Thermosetting polyimide resins and thermosetting silicone resins are particularly preferably used due to their high smoothing effect. Undercoat layer 13 has a thickness of preferably from 0.1 to 3.0 $\mu$m. When other resin films are laminated on support 11, undercoat layer 13 may be formed before lamination processing, alternatively undercoat layer 13 may be formed after lamination processing.

As the thermosetting polyimide resins, polyimide resins which are obtained by thermally polymerizing an imide monomer having two or more unsaturated terminal groups in the molecule, e.g., bisallylnadiimide "BANI", manufactured by Maruzen Petrochemical Co., Ltd., are preferably used. This imide monomer can be thermally polymerized at a relatively low temperature after being coated on the surface of a support in the state of monomer, and so the material monomer can be directly coated on a support and hardened. The imide monomer can be used by being dissolved in general purpose solvents, is excellent in productivity and working efficiency, has a small molecular weight, and the solution of the imide monomer is low in viscosity, so that it gets into the unevenness well in coating and is excellent in smoothing effect.

As the thermosetting silicone resins, silicone resins obtained by polymerization by a sol-gel method with silicon compounds having introduced an organic group as the starting material are preferably used. The silicone resins have a structure in which a part of the silicon dioxide bonding is substituted with an organic group, and the resins are excellent in heat resistance as compared with silicone rubbers and more flexible than silicon dioxide films, so that cracking and peeling are hardly generated when a resin film is formed on a support comprising a flexible film. Further, since the starting material monomers can be directly coated on a support and hardened, a general purpose solvent can be used, the resins get into the unevenness well, and smoothing effect is high. Since condensation polymerization reaction advances from comparatively low temperature by the addition of a catalyst such as an acid and a chelating agent, hardening can be expedited, and a resin film can be formed with a general purpose coating apparatus. In addition, thermosetting silicone resins are excellent in a gas barrier property and shield gases which are generated from a support when a magnetic layer is formed and hinder the crystallizability and orientation of a magnetic layer and an under layer, so that they can be particularly preferably used.

It is preferred to provide minute projections (texture) on the surface of the undercoat layer for the purpose of reducing the true contact area of a magnetic head and a magnetic disc and improving a sliding property. Further, the handling property of a support can be improved by providing minute projections. For forming minute projections, a method of coating spherical silica particles and a method of coating an emulsion to thereby form projections of an organic substance can be used, and a method of coating spherical silica particles to form minute projections is preferred for ensuring the heat resistance of a undercoat layer.

The height of the minute projection is preferably from 5 to 60 nm, and more preferably from 10 to 30 nm. When the height of the minute projection is too high, the recording and reproducing characteristics of signals are deteriorated due to the spacing loss between recording and reproducing heads and the medium, while when the height of the minute projection is too low, a sliding property cannot be improved sufficiently. The density of the minute projections is preferably from 0.1 to 100/$\mu$m$^2$, and more preferably from 1 to 10/$\mu$m$^2$. When the density of the minute projections is too low, the improving effect of a sliding property decreases, while when it is too high, high projections increase by the increase of agglomerated particles, and recording and reproducing characteristics are degraded.

Further, minute projections can also be fixed on the surface of the support by a binder. It is preferred to use resins having sufficient heat resistance as the binder. As the resins having heat resistance, solvent-soluble polyimide resins, thermosetting polyimide resins and thermosetting silicone resins are particularly preferably used.

It is preferred to provide under layer 14 between the support and a magnetic layer. As under layer 14, Cr; alloys of Cr with metals selected from Ti, Si, W, Ta, Zr, Mo and Nb; Ru and C are exemplified. These materials may be used alone or two or more mixture may be used in combination. The orientation of a magnetic layer can be improved by using such under layer 14, and so recording characteristics are elevated. An under layer preferably has a thickness of preferably from 10 to 200 nm, and particularly preferably from 20 to 100 nm.

A seed layer (not shown in the figure) may be provided between under layer 14 and magnetic recording layer 12 for the purpose of improving the crystallizability of under layer 14. The seed layer can be formed of Ta, Ta-Si, Ni-P and Ni-Al.

Protective layer 15 is provided for the purpose of preventing the corrosion of metallic materials contained in magnetic layer 12, preventing the abrasion of magnetic layer 12 by the pseudo-contact or sliding by contact of a magnetic head and a magnetic disc, to thereby improve running durability and corrosion resistance. In a protective layer, materials, such as silica, alumina, titania, zirconia, oxides, e.g., cobalt oxide and nickel oxide, nitrides, e.g. , titaniumnitride, silicon nitride and boron nitride, carbides, e.g., silicon carbide, chromium carbide and boron carbide, and carbons, e.g., graphite and amorphous carbon can be used.

A protective layer is a hard film having a hardness equal to or higher than that of the material of a magnetic head, and those which hardly cause burning during sliding and stably maintain the effect are preferred, since such hard films are excellent in sliding durability. At the same time, those which have less pinholes are excellent in corrosion resistance and preferred. As such a protective layer, a hard carbon film called DLC (diamond-like carbon) manufactured by a CVD method is exemplified.

A protective layer can be formed by laminating two or more thin films each having different property. For example, it becomes possible to reconcile corrosion resistance and durability on a high level by providing a hard carbon protective layer on the surface side for improving sliding characteristics and a nitride protective layer, e.g., silicon nitride, on the magnetic recording layer side for improving corrosion resistance.

Lubricating layer 16 is provided on protective layer 15 for improving running durability and corrosion resistance. Lubricants, e.g., well-known hydrocarbon lubricants, fluorine lubricants and extreme-pressure additives are used in lubricating layer 16.

The examples of the hydrocarbon lubricants include carboxylic acids, e.g., stearic acid and oleic acid, esters, e.g., butyl stearate, sulfonic acids, e.g. , octadecylsulfonic acid, phosphoric esters, e.g., monooctadecyl phosphate, alcohols, e.g., stearyl alcohol and oleyl alcohol, carboxylic acid amides, e.g., stearic acid amide, and amines, e.g., stearylamine.

The examples of the fluorine lubricants include lubricants obtained by substituting a part or all of the alkyl groups of the above hydrocarbon lubricants with fluoroalkyl groups or perfluoro polyether groups. The examples of the perfluoro polyether groups include a perfluoromethylene oxide polymer, a perfluoroethylene oxide polymer, a perfluoro-n-propylene oxide polymer $[(CF_2CF_2CF_2O)_n]$, a perfluoroisopropylene oxide polymer $\{[CF(CF_3)CF_2O]_n\}$, and copolymers of these polymers. Specifically, a perfluoromethylene-perfluoroethylene copolymer having hydroxyl groups at the terminals of molecules (FOMBLIN Z-DOL, trade name, manufactured by Ausimont K.K.) is exemplified.

As the extreme-pressure additives, phosphoric esters, e.g., trilauryl phosphate, phosphorous esters, e.g., trilauryl phosphite, thiophosphorous esters, e.g., trilauryl trithiophosphite, thiophosphoric esters, and sulfur series extreme-pressure additives, e.g., dibenzyl disulfide, are exemplified.

These lubricants can be used alone or a plurality of lubricants can be used in combination. A lubricating layer can be formed by coating a solution obtained by dissolving a lubricant in an organic solvent on the surface of protective layer 15 by spin coating, wire bar coating, gravure coating, or dip coating, or depositing the coating solution on the surface of protective layer 15 by vacuum deposition. The coating amount of lubricants is preferably from 1 to 30 mg/m$^2$, and particularly preferably from 2 to 20 mg/m$^2$.

It is also preferred to use a rust preventive in combination for elevating corrosion resistance. The examples of the rust preventives include nitrogen-containing heterocyclic rings, e.g., benzotriazole, benzimidazole, purine, and pyrimidine, derivatives obtained by introducing alkyl side chains to the mother nuclei of the above nitrogen-containing heterocyclic rings, nitrogen- and sulfur-containing heterocyclic rings, e.g., benzothiazole, 2-mercaptobenzothiazole, tetraazaindene ring compounds, and thiouracyl compounds, and derivatives of these nitrogen- and sulfur-containing heterocyclic rings. Rust preventives may be mixed with lubricants and then coated on protective layer 15, alternatively they may be coated on protective layer 15 prior to the coating of lubricants and then lubricants may be coated thereon. The coating amount of rust preventives is preferably from 0.1 to 10 mg/m$^2$, and particularly preferably from 0.5 to 5 mg/m$^2$.

## EXAMPLES

The present invention is described below with reference to specific examples, but the present invention should not be construed as being limited thereto.

## EXAMPLE 1

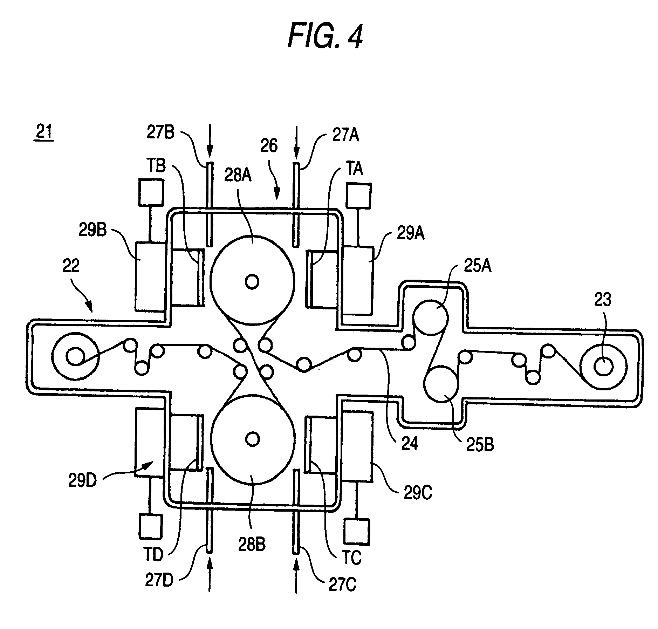

An undercoat layer coating solution comprising 3-glycidoxypropyltrimethoxysilane, phenyltriethoxysilane, hydrochloric acid, aluminum acetylacetonate and ethanol was coated on a polyethylene naphthalate film having a thickness of 52 $\mu$m and a surface roughness (Ra) of 1.4 nm by gravure coating, and the coated solution was dried and hardened at 100°C, thereby a undercoat layer having a thickness of 1.0 $\mu$m comprising a silicone resin was formed. A coating solution obtained by mixing silica sol having a particle size of 25 nm and the above undercoat layer coating solution was coated on the undercoat layer by gravure coating, thereby projections having a height of 15 nm were formed on the undercoat layer in the density of 10/$\mu$m$^2$. The undercoat layer was formed on both sides of the support film. This raw web 24 was mounted on web sputtering apparatus 21 shown in Fig. 4 and the following layers were coated on the undercoat layer by a DC magnetron sputtering method while moving the film (raw web 24) with keeping in contact with a can cooled with water; an under layer comprising Cr/Ti in a molar ratio of 80/20 in a thickness of 60 nm; and then a magnetic layer comprising (Co/Pt/Cr in a molar ratio of 70/20/10)/SiO$_2$ in a molar ratio of 88/12 in a thickness of 25 nm. These under layer and magnetic layer were formed on both sides of the support film. Subsequently, the raw web was mounted on a web type CVD apparatus, and a nitrogen-added DLC protective layer film comprising C/H/N of 62/29/7 in molar ratio was formed in a thickness of 10 nm by an RF plasma CVD method using ethylene gas, nitrogen gas and argon gas as the reaction gases. At this time, bias voltage of -400 V was applied to the magnetic layer. The protective layer was also provided on both sides of the film. On the protective layer surface was then coated a solution obtained by dissolving a perfluoro polyether lubricant having hydroxyl groups at molecule terminals (FOMBLIN Z-DOL, manufactured by Montefluos Co.) in a fluorine lubricant (HFE-7200, manufactured by Sumitomo 3M Limited) by gravure coating, thereby a lubricating layer having a thickness of 1 nm was formed. The lubricating layer was also formed on both sides of the film. A 4.57 cm (1.8 inch) size disc was punched out of the raw web, subjected to tape burnishing treatment, and built into a metal cartridge, whereby a compact removable magnetic recording medium was obtained.

## EXAMPLE 2

A disc-like sheet having a diameter of 130 mm was punched out of the raw web in Example 1 having formed thereon a undercoat layer and fixed on a circular ring. The under layer and magnetic layer having the same compositions respectively as in Example 1 were coated on both sides of the sheet by means of a batch sputtering apparatus, further the protective layer was formed by the CVD apparatus. The same lubricating layer as in Example 1 was formed on the sheet by dip coating. A 4.57 cm (1.8 inch) size disc was punched out of the sheet, subjected to tape burnishing treatment, and built into a metal cartridge, whereby a compact removable magnetic recording medium was obtained.

## EXAMPLE 3

An experiment were conducted in the same manner as Example 1, except that projections having a height of 15 nm were formed on the undercoat layer, in the density of 1/$\mu$m$^2$ and that an under layer is made of Ru and has a thickness of 30 nm.

**Evaluation:**

(1) Magnetic characteristics

Coercive force Hc was measured by VSM.

(2) Run out

Each of the above-prepared discs was rotated at 3,000 rpm, and the run out of each disc at the radial position of 20 mm was measured by a laser displacement gauge.

(3) C/N Ratio

Recording and reproduction of linear recording density of 130 kFCI were performed with an MR head having a reproduction track width of 2.2 $\mu$m and a reproduction gap of 0.26 $\mu$m, and the ratio of reproduction signal to noise (C/N ratio) was measured. In the measurement, the engine speed was 3,000 rpm, the radial position was 20 mm, and the head load was 3 gf.

(4) Modulation

The reproduction output in the measurement of C/N ratio was measured with one round of the disc (envelope), and min/max ratio of the output was measured.

(5) Durability

Each of the above-prepared discs was run with repeating recording and reproducing by the measuring conditions as in the item (3), running was stopped when the output reached the initial value - 3 dB, and this was taken as the time of durability. The test atmosphere was 23°C 50% RH, and the test was a maximum of 300 hours.

The results of evaluations of the compact removable magnetic recording media prepared in Examples 1 and 2 are shown in Table 1 below.

TABLE 1

| Example No. | Hc (kA/m) | Run Out ($\mu$m) | C/N Ratio (dB) | MDN (%) | Time of Durability (hour). |
|---|---|---|---|---|---|
| Example 1 | 199 | 25 | 0 | 95 | >300 |
| Example 2 | 206.4 | 30 | +0.5 | 92 | >300 |
| Example 3 | 210 | 25 | +1.2 | 91 | >300 |

As can be understood from the above results , the compact removable magnetic recording media according to the present invention are excellent both in recording characteristics and durability.

The compact removable magnetic recording medium according to the present invention is a disc medium encased in a cartridge and having a recording layer comprising a cobalt-containing ferromagnetic metal alloy at least on one side of a flexible polymer support, and the disc ensures high performances, high reliability and can be manufactured inexpensively due to its structure.

**Claims**

1. A removable magnetic recording medium which is a removable disc medium for use in a magnetic recording system utilizing an MR head, wherein

   - the removable disc medium is encased in a cartridge,
   - the diameter of the disc medium is from 20 mm to 50 mm,
   - the disc medium comprises a flexible polymer support (11), an undercoat layer (13), a recording layer (12), a protective layer (15) and a lubricating layer (16) in this order,
   - the support (11) contains polyethylene terephthalate or polyethylene naphthalate and has a thickness of 30

$\mu$m to 70 $\mu$m,

- the surface of the undercoat layer (13) has 0.1 to 100/$\mu$m$^2$ of projections having a height of from 5 nm to 60 nm,
- the recording layer (12) comprises a nonmagnetic oxide and a ferromagnetic metal alloy containing cobalt, and
- the lubricating layer (16) contains a lubricant.

**2.** The removable magnetic recording medium according to claim 1, wherein the ferromagnetic metal alloy comprises one of combinations selected from Co-Pt, Co-Cr, Co-Pt-Cr, Co-Pt-Cr-Ta and Co-Pt-Cr-B.

**3.** The removable magnetic recording medium according to claim 1, wherein the nonmagnetic oxide is SiO$_2$.

**4.** The removable magnetic recording medium according to claim 1, wherein the recording layer has a thickness of from 10 nm to 60 nm.

**5.** The removable magnetic recording medium according to claim 1, wherein the surface of the undercoat layer has 1 to 10/$\mu$m$^2$ of projections having a height of from 5 nm to 60 nm.

**6.** The removable magnetic recording medium according to claim 1, wherein the disc medium further comprises an under layer (14) so that the flexible polymer support (11), the under layer (14) and the recording layer (12) are in this order, and the under layer (14) comprises Cr, Ru, C or an alloy of Cr with a metal selected from Ti, Si, W, Ta, Zr, Mo and Nb.

**Patentansprüche**

**1.** Wechselbares magnetisches Aufzeichnungsmedium, das ein Wechselplattenmedium zur Verwendung in einem magnetischen Aufzeichnungssystem ist, das einen MR-Kopf verwendet, worin

- das Wechselplattenmedium in einer Kartusche eingeschlossen ist,
- der Durchmesser des Plattenmediums 20 bis 50 mm ist,
- das Plattenmedium einen flexiblen Polymerträger (11), eine Unterschicht (13), eine Aufzeichnungsschicht (12), eine Schutzschicht (15) und eine Gleitschicht (16) in dieser Reihenfolge umfasst,
- der Träger (11) Polyethylenterephthalat oder Polyethylennaphthalat enthält und eine Dicke von 30 bis 70 $\mu$m hat,
- die Oberfläche der Unterschicht (13) 0,1 bis 100/$\mu$m$^2$ an Vorsprüngen mit einer Höhe von 5 bis 60 nm hat,
- die Aufzeichnungsschicht (12) ein nichtmagnetisches Oxid und eine ferromagnetische Metalllegierung, die Cobalt enthält, umfasst und
- die Gleitschicht (16) ein Gleitmittel enthält.

**2.** Wechselbares magnetisches Aufzeichnungsmedium gemäß Anspruch 1, worin die ferromagnetische Metalllegierung eine Kombination umfasst, die aus Co-Pt, Co-Cr, Co-Pt-Cr, Co-Pt-Cr-Ta und Co-Pt-Cr-B ausgewählt ist.

**3.** Wechselbares magnetisches Aufzeichnungsmedium gemäß Anspruch 1, worin das nichtmagnetische Oxid SiO$_2$ ist.

**4.** Wechselbares magnetisches Aufzeichnungsmedium gemäß Anspruch 1, worin die Aufzeichnungsschicht eine Dicke von 10 bis 60 nm hat.

**5.** Wechselbares magnetisches Aufzeichnungsmedium gemäß Anspruch 1, worin die Oberfläche der Unterschicht 1 bis 10/$\mu$m$^2$ an Vorsprüngen mit einer Höhe von 5 bis 60 nm hat.

**6.** Wechselbares magnetisches Aufzeichnungsmedium gemäß Anspruch 1, worin das Plattenmedium ferner eine Unterschicht (14) umfasst, so dass der flexible Polymerträger (11), die Unterschicht (14) und die Aufzeichnungsschicht (12) in dieser Reihenfolge sind, und die Unterschicht (14) Cr, Ru, C oder eine Legierung aus Cr mit einem aus Ti, Si, W, Ta, Zr, Mo und Nb ausgewählten Metall umfasst.

**Revendications**

**1.** Support d'enregistrement magnétique amovible qui est un support de disque amovible pour une utilisation dans un système d'enregistrement magnétique utilisant une tête d'enregistrement magnétique (MR), dans lequel

- le support de disque amovible est logé dans une cartouche,
- le diamètre du support de disque est de 20 mm à 50 mm,
- le support de disque comprend un support (11) en polymère flexible, une sous-couche (13), une couche d'enregistrement (12), une couche protectrice (15) et une couche lubrifiante (16) dans cet ordre,
- le support (11) contient du poly(téréphthalate d'éthylène) ou du poly(naphthalate d'éthylène) et a une épaisseur de 30 $\mu$m à 70 $\mu$m,
- la surface de la sous-couche (13) comporte 0,1 à 100/$\mu$m$^2$ de protubérances ayant une hauteur de 5 nm à 60 nm,
- la couche d'enregistrement (12) comprend un oxyde non magnétique et un alliage de métal ferromagnétique contenant du cobalt, et
- la couche lubrifiante (16) contient un lubrifiant.

2. Support d'enregistrement magnétique amovible selon la revendication 1, dans lequel l'alliage de métal ferromagnétique comprend l'une des combinaisons choisies parmi Co-Pt, Co-Cr, Co-Pt-Cr, Co-Pt-Cr-Ta et Co-Pt-Cr-B.

3. Support d'enregistrement magnétique amovible selon la revendication 1, dans lequel l'oxyde non magnétique est du SiO$_2$.

4. Support d'enregistrement magnétique amovible selon la revendication 1, dans lequel la couche d'enregistrement a une épaisseur de 10 nm à 60 nm.

5. Support d'enregistrement magnétique amovible selon la revendication 1, dans lequel la surface de la sous-couche comporte 1 à 10/$\mu$m$^2$ de protubérances ayant une hauteur de 5 nm à 60 nm.

6. Support d'enregistrement magnétique amovible selon la revendication 1, dans lequel le support de disque comprend en outre une sous-couche (14) de sorte que le support (11) en polymère flexible, la sous-couche (14) et la couche d'enregistrement (12) sont dans cet ordre, et la sous-couche (14) comprend du Cr, du Ru, du C ou un alliage de Cr avec un métal choisi parmi Ti, Si, W, Ta, Zr, Mo et Nb.

FIG. 1A

FIG. 1B

FIG. 2

*FIG. 3*

## FIG. 4